# EUROPEAN PATENT APPLICATION

(11) **EP 3 035 208 A1**
(43) Date of publication of application: **22.06.2016**
(21) Application number: 14199339.4
(22) Date of filing: 19.12.2014
(51) Int. Cl.: G06F 17/30

(54) **Improving the selection and control of content files**

(71) Applicant: Koninklijke KPN N.V., 2516 CK The Hague (NL)
(72) Inventor: van Steenbergen, Ate, 9737 NN Groningen (NL); Alberts, Albert, 9711 HT Groningen (NL)
(74) Representative: Wuyts, Koenraad Maria

(57) **Abstract**

A device is described to play a content file with metadata where the metadata comprises data representing sensor data acquired during a previous playing of the content file. The device can thus detect a previous set of conditions and offer the content file for play when the conditions reoccur. The device comprises a player for playing the content file for experience of the content by the user, a sensor arranged to acquire sensor data, and a processing unit arranged to offer the content file for play by the player in dependence upon comparison between the metadata and sensor data acquired by the sensor. A further device controls an ambient controller to reproduce the ambient conditions sensed during the previous playing of the content file.

## Description

The invention relates to a device arranged to play a content file with metadata, a method of offering a content file to a user for play by a player, a method of playing a content file, an application package arranged to play a content file with metadata, a method to control an ambience and a system arranged to play a content file and control an ambient environment.

### Background

User enjoyment of electronic content has become increasingly sophisticated with the advent of personal computers, social media and the development of increasingly complex mobile devices such as smartphones and tablet devices. Users can now create and access content almost anywhere and their enjoyment of such content has become increasingly interactive through the use of social media platforms. The content itself now typically includes a wide range of electronic data types including digital photographs and other image files, films, music files, video files, comments, stories and even data concerning the user themselves including for example biometric and recorded biological data and information such as location or geographical position of the user.

This content and data can now be created by the user, freely shared and accessed often with little time lag between its creation and access by other users.

However, while the user can freely create content, finding content of interest to the user is another matter and users are reliant on explicit tagging within platforms and on personal networks of contacts in order to find content that may be relevant to them. In addition to this while content can freely be created it is incumbent on the user himself to correctly tag his own content so that other users can find it in the future, should they so wish.

Known methods provide users with targeted content.

US 2013/0185750 describes a method of providing, or targeting, content to a user by acquiring data from sensors, correlating the data and using it to decide which third party content, for example advertisements, should be included in a data stream already being delivered to a user.

Improved handling of, and interaction with, content files is provided by the use of metadata, which can be attached or added to content files themselves to provide extra information about the content. Metadata is extra data attached to, inserted into, or associated with, a content file which while being separate from the content itself nevertheless includes important information about the content. Metadata might include information about who made the content, the identity of the maker for example, or it might identify the equipment with which the file was created. A photo file might also include metadata about the exposure settings under which the photograph was taken. A film might include the total running length. Audio file metadata often includes important information such as the name of the artist, total running time and the genre of the music. The latter is important in the creation of playlists.

Metadata is typically included in the content file itself according to a known metadata standard, for example the Extensible Metadata Platform standard, an ISO standard, and frequently referred to as XMP, and as is known, the information stored in metadata can be used to select, or access, appropriate content.

US 2011/0295843 describes a system for creating playlists of music based on collected data including user data inputted by the user, sensor data inputted into a processor, and music metadata containing information such as artist name and music genre.

Increased computerised control of systems also allows the user to control his own environment, for example by automatic control of temperature controllers, lighting dimmers, and automatically driven curtains or other window coverings, etc.

US 2013/0245796 describes a system for controlling an ambience using monitors connected to a home automation interface and media content provider. The system controls the user experience of a surrounding environment through the use of ambience functions that determines an ambience structure based upon input structures describing for example television digital content, personal preference, content history or even social network information.

People can share content, but they cannot share the physical experience of the content, for example the circumstances, or ambience, under which it was experienced unless they are actually accessing the content simultaneously. User experience of content is actually very limited.

It is a problem to provide users with a genuinely shared content experience.

### Summary

A solution to the problem is provided by a device arranged to play a content file with metadata wherein the metadata comprises data representing sensor data. The sensor data could be acquired during a previous playing of the content file, or could be acquired during creation of the content file. The device comprises a player for playing the content file for experience of the content by the user, a sensor arranged to acquire sensor data and a processing unit. The processing unit is arranged to offer the content file for play by the player in dependence upon comparison between the metadata and sensor data acquired by the sensor.

In an embodiment the device is typically an electronic device for playing, or otherwise presenting, content such as a music file, a video or film, an image file or other file representing an image or for example a photograph, or for presenting the user with access to a discussion forum or other site on which users can upload links and statements, interact with each other and post comments. The player can be a native application, and be embedded in hardware and software, or can be an app, or application, residing on an operating system of the device.

In a typical embodiment a content file represents a single playable or presentable item, for example an individual song, an individual film, an individual video, an electronic game (for example playable on an XBOX, a Wii, a PlayStation, or PCgame), an individual photograph, a single post or comment etc. but in an alternative embodiment could also represent part of an individual item. In this latter embodiment individual films, photos, comments etc. may be spread over more than one file, for example in order to optimise file administration or file storage in the device or on a social media site. In such cases a single file might represent part of an item, for example part of a song, film, photograph or post etc. Files may be stored in a memory in the device itself, or stored in an external memory or storage disk to which the device is coupled or to which the device has access. As an example, the external memory or storage disk may be a memory store or disk-storage to which the device can directly couple, such as via a cable or via direct short range or Wi-Fi access, or alternatively may be in a cloud, a cloud device or a server accessible via a network or a Network Attached Storage (NAS).

In an embodiment the device comprises a sensor for recording data. The sensor may be integral to the device, or attached or otherwise coupled to it so that data can pass between the device and the sensor, or may be provided in the form of an application or other software package uploaded or downloaded onto the device.

In a further embodiment there may be more than one sensor. Sensors may be arranged to sense different phenomena, for example temperature and pressure, or may be arranged to sense the same phenomena, for example temperature, and may be provided in multiple to allow for redundancy.

In an embodiment the device comprises a player for playing a content file for experience of the content by the user and the player may be a music player, a video player, a photograph viewer or other package which shows, presents or otherwise manipulates photographs or other image files, a social media portal, a copy of a social media platform downloaded onto the device, or other player which presents or plays or plays back content files for the enjoyment and/or participation of the user.

In an embodiment the device comprises a processing unit arranged to offer the content file for play by the player in dependence upon comparison between the metadata and sensor data acquired by the sensor.

In a further embodiment the sensor available to the device acquires sensor data and the processing unit identifies and reads the metadata associated with the content files and makes a comparison between the acquired sensor data and the metadata. The processor makes the comparison between the sensor data as acquired and the metadata associated with the content file, and which is either stored in the content file, as part of a metadata part, or is stored separately in a metadata file recognisable by the processor as containing the appropriate metadata for the respective content file. In a further embodiment the comparison can be a direct comparison. To make the comparison the processor may access the memory where the content file and associated metadata is stored and directly read the metadata associated with the content file.

In an embodiment the sensor values are stored in a set as original values, or processed values. The processed values may, for example, include a single value representative of the values acquired, or a value representing the average value of the acquired sensor data, or the average value of a sub-set of values acquired if the set of sensor data has also been processed to remove outliers or alternatively processed to cut down the original sensor data to a manageable size. The stored processed values may also include a string. Stored values may also be stored along with a time value, which may represent for example the time at which the sensor values were acquired, or a time period, time value or other time indication which represents the time over which or for which multiple sensor values were acquired.

The metadata associated with a content file also includes such or similar data, and the processor loads or otherwise directly accesses both these sets of data. In an embodiment the processor may comprise a pointer to at least the stored metadata allowing it to read the metadata values directly or to read them out into a buffer or other short term memory accessible by the processor. When the processor reads both sets of data, the sensor data and the metadata it performs a comparison.

In an embodiment the comparison is a mathematical routine written in programmable code and compiled into code which is executable on the operating level of the processor. In an alternative embodiment the comparison could be implemented in dedicated hardware as a separate dedicated function.

In an embodiment the comparison can be made on an interpretation of the data by programmed logic or artificial intelligence. For example a sensor may read or indicate a high temperature which, according to programmed intelligence or logic, may be interpreted as indicating the presence of summer. Then selection can be made of files with metadata containing high light intensity, indicating sunny conditions, or high air pressure, indicating good summer weather. Alternatively, if high light intensity is detected than the logic could be programmed to select files with high temperature in the metadata. Alternatively, a comparison can be made using a combination of data, according to knowledge in the device or processor. In this case, a multidimensional match is needed, for example including selections on high temperature with high heartbeat or pressure. Alternatively, high temperature and high air pressure may be measured by the sensors, and the programmed logic or intelligence instructs the processor to look for both these two values in the metadata within a certain variation.

In an embodiment the input to the comparison function is a pair of input values, one taken from the sensor data, either raw or processed, and the other extracted from the metadata. The input values themselves can be single values or strings of values, or sets of values, or vectors. In an embodiment the comparison may typically comprise a subtraction operation which subtracts one input value from the other to produce an output value.

Based on this comparison the processing unit decides whether to offer the content file to the user for playing or otherwise accessing. This decision is based on the form or type of logic applied by the processor. This logic can be defined or otherwise pre-determined and can be based on a variety of rules. The logic can be based for example on comparing the value of the meta-data and the value of the sensor data, and may include comparison of the output value with a pre-determined threshold and a consideration of whether or not it is lower than the predetermined threshold value. Or it may include consideration of whether the output value, if it is a string, comprises a value which is smaller than a pre-determined threshold value. Alternatively it may include consideration of whether, if the output value is a vector, it comprises a vector value which is smaller than a pre-determined threshold value. Alternatively the logic may be based on whether the meta-data is of the same data type as the sensor data or not. In a further alternative embodiment the logic can be based on whether the actual value of the measured sensor is in the range of the values of the meta data. In embodiments the processor decides, according to logic, whether or not to select the content file based on the comparison. Where more than one content file is available the processor may read or otherwise access the metadata associated with multiple content files and thereby identify the appropriate content files.

Thus, a direct comparison can be made, by the processing unit, between contemporary conditions experienced by the user as sensed via the device, for example temperature and light level, and metadata which stores sensor data acquired during a previous playing of a content file. In this way the device can identify a content file which, as it was previously played or otherwise accessed, was done so under similar or near similar or identical conditions to those experienced contemporaneously by the user.

The device, having thus identified the content file, can offer the content file to the user as being a content file which was previously watched under similar conditions to the ones currently being experienced by the user, as sensed by the device. Thus the user can experience replicated experience of content.

In an embodiment, the user does not even need to be the same user who experienced the original playing of the content file when the metadata was created from sensor data. The content file can be acquired from another user and can be used to share experiences between users. In this way if a user watches a video, say, under certain ambient circumstances, and metadata is stored in, or associated with, the video in which sensor data recording those ambient circumstances is stored, and the video content file plus associated metadata is then transferred to the device of another user, that device can then identify the video and offer it to the second user when sensors attached to, or available to, that user's device record sensor data indicating that the same ambient circumstances occur. Thus a full user experience can be shared between users.

In an embodiment the device may comprise memory for storage of the content file and its associated metadata. However in a specific embodiment the device may only store the metadata locally and the content file itself may be stored elsewhere, for example for download to the device itself.

In an embodiment the comparison between metadata and sensor data is based on whether the difference between the metadata and the sensor data is within a predetermined threshold. This allows the device to offer a content file to the user only when the metadata and the sensor data as detected are found to be within a certain pre-determined range of each other.

In an embodiment the sensor is arranged to acquire sensor data during real time while the player is active. In this way the device may be ready to offer relevant content to the user at any time by comparison of sensor data with stored metadata for content files.

In an embodiment the player is an application running on the device and the sensor is arranged to acquire sensor data when the application is running.

In an embodiment the device is one of a content player; a media player; a photo viewer; a video player; a music player; a digital audio player; a mobile device; a tablet; a laptop; a personal computer; a Set Top Box. However the device can also be an iPod, iPad or any other device capable of hosting a player and either hosting a sensor or coupling to a sensor and receiving sensor data.

In an embodiment the sensor can be arranged to record data on any one of temperature, light intensity, average light colour, λmax (the wavelength of maximum absorbance in the spectrum), sound, air humidity, pressure (for example air pressure or water pressure), heart-beat, blood glucose, blood pressure, location, speed of the device, or acceleration of the device. For example, temperature can be measured in Celsius or Fahrenheit; light colour can be measured with recourse to wavelengths, or relative wavelengths of red-yellow-blue, or in average wavelength, by measuring in nanometres (nm); sound can be measured in decibels (dB, dBA); heartbeats can be measured in beats per minute, blood glucose can be measured in mmol/L or mg/dL; blood pressure is usually measured in mm of mercury but can be measured in any unit suitable for the blood pressure monitor which is used; location can be measured, or calculated, with reference to a geolocator or other locator or location finding device; velocity or speed of the device can be measured in metres per second (m/s); acceleration can be measured in metres per second squared (m/s^2). Measurement of various phenomena can be measured or sensed using known sensor technology. For example, acceleration can be measured by an accelerometer either incorporated into or attached to the device.

In a further embodiment the sensor can be built into the device but in alternative embodiments can be attached or coupled to the device either physically and/or electronically. Embodiments of coupling include for example Wi-Fi, HDMI, Bluetooth, USB, BNC Coax connector. The sensor data can in fact be any data recorded by a sensor during play or play back of a content file.

The invention also relates to a method of offering a content file to a user for play by a player, in which the content file is associated with metadata comprising data representing sensor data acquired during a previous playing of the content file, or acquired during creation of the content. The method comprises the steps of acquiring sensor data via a sensor, reading the metadata via a processor, and offering the content file for play by a player in dependence upon comparison between the metadata and sensor data acquired by the sensor. Where multiple content files are stored the processor may directly read the metadata associated with the multiple content files where it is stored and select, or choose, the content files with associated metadata which most closely aligns with the sensor data detected by the sensor. The processor may select one content file or several content files to offer to the user for play.

The invention also relates to a method of playing a content file, the method comprising the steps of acquiring sensor data during a playing of a content file, creating metadata based on the sensor data, associating the metadata with the content file, acquiring new sensor data and identifying the content file based on a comparison of the new sensor data with the metadata.

In an embodiment identifying the content file may mean comparing the metadata with the newly acquired sensor data and selecting it if the difference between the stored metadata and the newly acquired data is within a pre-determined range or threshold. This can be done in several ways. The measured value of the sensor can be subtracted from each value in the metadata of the corresponding property, for example temperature, pressure, or any other quantity. Then the file can be selected if or when one of the results is smaller than a predefined or pre-determined value. In another example an average value of the metadata is determined, and either stored in the metadata itself, or calculated in and by the processor itself when needed. Then the current value measured by the sensor is subtracted from the average value of the metadata. If or when the absolute value of this difference is smaller than a predetermined value, the file is selected. In a further embodiment the actual measured value is compared with the first value or alternatively with a random value of the metadata values. In an alternative embodiment determine an average value of the sensor over a certain time period is determined and compared with the average value of the metadata.

Once selected the content file may be offered to the user for play.

In an embodiment the metadata is written over, or replaces or is caused to replace, previously created metadata. This allows for metadata to be constantly updated by new user experiences which either be further shared forwards with other users or which can simply be enjoyed again by the same user when the most recent ambient conditions reoccur.

In an alternative embodiment the metadata is added to previously created metadata. This allows for metadata to be constantly updated or improved or enhanced by new user experiences which either be further shared forwards with other users or which can simply be enjoyed again by the same user when the most recent ambient conditions reoccur.

The invention also relates to an application package arranged to play a content file with metadata and in which the metadata comprises data representing sensor data acquired during a previous playing of the content file. The application package comprises a player for playing the content file for experience of the content by the user, a sensor component arranged to receive sensor data from a sensor and a processing component. The processing component is arranged to offer the content file for play by the player in dependence upon comparison between the metadata and sensor data received by the sensor.

In an embodiment the comparison between metadata and sensor data is based on whether the difference between the metadata and the sensor data is within a predetermined threshold.

In an embodiment the sensor component is arranged to receive sensor data during real time while the application package is running.

The invention also relates to a method to control an ambience with sensor data via metadata, the method comprising the steps of acquiring sensor data during a first playing of a content file, creating metadata based on the sensor data, associating created metadata with the content file and further controlling an ambient controller in dependence on the associated metadata during a second playing of the content file.

Therefore the content file with metadata can also be used to control an ambient environment. In an embodiment ambient control can also mean environmental control.

In an embodiment sensor data is captured, detected or otherwise recorded during a playing of a content file. The playing of a content file includes initial recording, playing, playing back, enacting or showing the content file in such a way that the contents could be accessed and enjoyed by a user. The sensor can be attached or coupled to the device which plays the content or be integral to it or within it. The sensor can be any sensor capable of recording data but is typically, in this embodiment, a sensor which can record environmental or ambient data, or other data which describe or record an environment, such as temperature, humidity, air pressure, light levels and colour of ambient light. Metadata is created based on the sensor data and is typically created using a processor. The created metadata is associated with the content file either by inserting it or inputting it into the content file or a separate but linked or relatable metadata file.

In an embodiment, when the content file, with associated metadata, is played on a later occasion a processor can read the associated metadata and use the stored data to control an ambient controller to recreate, or approximately recreate, the same or similar ambient environment which occurred during the previous playing of the content file when the data was recorded. The ambient controller can be a temperature controller, or thermostat, a humidifier, a lighting arrangement capable of controlling a light output, such as a dimmer switch with automatic control, or other controller arranged to control an ambient or environmental feature.

The invention also relates to a system for controlling an ambient controller comprising an ambient controller arranged to control an environmental feature controller, a processor to control the ambient controller, a sensor to acquire sensor data and a content player arranged to play a content file. The content file has associated metadata which comprises data representing sensor data acquired during a previous playing of the content file. The metadata comprises first metadata and second metadata. The sensor is arranged to acquire sensor data. The processor is arranged to read the first metadata associated with the content file, compare the acquired sensor data with the first metadata, and offer the content file for playback by the content player when the difference between the first metadata and the sensor data is within a first predetermined threshold. The processor is further arranged to control the ambient controller during playback of the offered content file to produce an ambient feature whose range, or difference, from the second metadata is within a second predetermined threshold.

In alternative embodiment the metadata may have been acquired during creation of the content.

In an alternative embodiment the user simply chooses a content file and the processor is arranged to read the first or second metadata, or both, and use it to control the ambient controller during playback of the content file to produce an ambient feature, or features, whose range or difference from the examined metadata, the first or second metadata or both, is within a threshold. The threshold may be a pre-determined threshold. In this embodiment the device does not need to comprise a sensor.

The ambient controller can be any controller capable of controlling an ambient feature, such as temperature, lighting, humidity, pressure, sound etc.

The first and second metadata can refer to individual metadata values. For example the first metadata could be a temperature while the second metadata is a light intensity. However it is also possible for first and second metadata to be collections of data, pairs of data, average data, sequences of data, minimum or maximum values, or statistical extrapolations of data.

In an embodiment a sensor acquires data and the processor compares this data with metadata stored with, in or associated with a content file. If the processor finds a match it offers the content file for play by the player thus allowing the user to choose to play or access a content file which was previously played under similar environmental conditions, at least in part, to the conditions currently being experienced as detected by the sensor.

If and when the content file is played the processor takes other metadata, not matched to the sensor data, and uses it to control the ambient controller to bring the ambient environment more into line with the full range of ambient features previously experienced during playing of the content file.

For example, if a content file is offered for playback because it was previously experienced under very similar temperature conditions to those sensed by the sensor, then if chosen for play by the user and played by the player the processor can select metadata describing light intensity, or light colour, or both, for example, and use this data to control a lighting controller to bring the lighting conditions into conformity with those also experienced during previous playing of the file.

In the embodiment described control is performed by one processor but this is not necessary, and in fact control of the ambient controller and selection of a content file for playback can be performed by separate but linked or coupled processors.

In general the metadata are recorded during a previous play of the file or during creation of the file and are taken from sensor data, but it is also possible that the metadata is pre-provided, for example during recording. This means, for example, that a song recorded in the studio, say a carnival song, can have metadata representing a temperature of 30 degrees Celsius filled in a metadata file. This filling in of metadata may be done by a person using a computer, or editor of the recorder, or may be performed automatically. This allows the song to be automatically selected if and when a temperature of 30 degrees is recorded, or a temperature of approximately 30 degrees, for example 30 degrees plus or minus 2 degrees, or for an ambient controller or some other device, for example an automatically controlled thermostat, to control the ambient temperature to reproduce a temperature of 30 degrees if the song is selected for play.

In an alternative embodiment a system controls an ambient controller and the system comprises an ambient controller arranged to control an environmental feature, a processor arranged to control the ambient controller, and a content player arranged to play a content file with associated metadata and wherein the metadata comprises data representing sensor data. The processor is arranged to read the metadata and control the ambient controller during playback of the content file to produce an ambient environment based on the contents of the metadata.

A content file suitable for selection and playing may be created by a device arranged to play a content file, the device comprising a sensor to acquire sensor data, a processing unit to create metadata for the content file, where the sensor is arranged to acquire sensor data during playing of the content file, and the processing unit is arranged to create metadata associated with the content file and further where the metadata comprises data derived from the acquired sensor data.

In an embodiment the device is typically an electronic device for playing, or otherwise presenting, content such as a music file, a video or film, a game, an image file or other file representing an image or for example a photograph, or for presenting the user with access to a discussion forum or other site on which users can upload links and statements, interact with each other and post comments.

In a typical embodiment a content file represents a single playable or presentable item, for example an individual song, an individual film, an individual video, an electronic game (for example playable on an XBOX, a Wii, a PlayStation, or PCgame), an individual photograph, a single post or comment etc. but in an alternative embodiment could also represent part of an individual item. In this latter embodiment individual films, photos, comments etc. may be spread over more than one file, for example in order to optimise file administration or file storage in the device or on a social media site. In such cases a single file might represent part of an item, for example part of a song, film, photograph or post etc.

In an embodiment the device comprises a sensor for recording data. The sensor may be integral to the device, or attached or otherwise coupled to it so that data can pass between the device and the sensor, or may be provided in the form of an application or other software package uploaded or downloaded onto the device.

In a further embodiment there may be more than one sensor. Sensors may be arranged to sense different phenomena, for example temperature and pressure, or may be arranged to sense the same phenomena, for example temperature, and may be provided in multiple to allow for redundancy.

In an embodiment the sensor is able to acquire sensor data during the playing, or playback, or presentation of the content file to the unit. Therefore the device may be arranged to record data via the sensor during play or playback of a file, for example during playing of a song if the content file is a music file, or when a file is otherwise enacted or shown on the device, for example during showing of a photograph if the file represents a photograph or during the playing of a game if the file represents a video game.

In an alternative embodiment the device is arranged to create a content file. In a further embodiment this means during recording of a content file, for example during the recording of a sound sample or a video. In an alternative embodiment this means creation of a content file from original data, for example during creation of a photograph file in an application, for example creation of a jpeg from raw data derived from a photographic camera. In this embodiment the device comprises a sensor to acquire sensor data and a processing unit to create metadata for the content file. The sensor is arranged to acquire sensor data during creation, or recording, of the content file and the processing unit is arranged to create metadata associated with the content file and wherein the metadata comprises data derived from the acquired sensor data.

In this embodiment there is at least one sensor which may be integral to the device or attached or otherwise coupled to it and which records or otherwise acquires data during recording of the content file.

In an embodiment either the sensor may acquire data during the total length of time for which the content file is played or recorded, or alternatively, the sensor may only acquire data during a portion of time for which the content file is played, recorded or otherwise presented to the user.

In an embodiment the device, either for playing or for recording of the content file, comprises a processing unit arranged to create metadata for a content file, which metadata comprises data derived from the acquired sensor data. The sensor data is therefore transcribed, converted or otherwise inserted into metadata for the content file.

In an embodiment the processing unit also processes the recorded sensor data, for example by calculating an average value for a set of data or calculating the median (value of data recurring most frequently in a set of recorded data) or calculating other indicators of the spread of data, for example standard deviation, maximum value and minimum value. In this way, a large amount of recorded data can be reduced to a representative value with a calculated, or estimated, accuracy. This has the advantage of reducing the amount of data. In an alternative embodiment sensor values may be averaged over a time interval, for example a minute. In an alternative embodiment, data may be transformed into another system, for example distance in miles transformed into distance in kilometres, pressure in PSI transformed into N/m^2 etc.

In an embodiment the processing unit may use sensor data from the entire quantity of sensor data acquired by the sensor, or alternatively the processing unit may use only a portion of the sensor data acquired by the sensor. For example, the processing unit may use only a particular subgroup of data types acquired by the sensor, or alternatively, the processing unit may use only sensor data acquired over a specific time period, or during a specific portion of the time over which the sensor acquires data.

In an embodiment the acquired data is put into, or inputted into, the content file as metadata. In an alternative embodiment the acquired data is put into, or inputted into, a separate metadata file which is associated with the content file in such a way that the data in it can be read, or understood, as the metadata for the content file.

In this way real time sensor data can be added to content during playing, or playout, or recording, of the content. Further, in this way extra information about the circumstances under which the content file is accessed or recorded, or about the environment in which it is accessed, recorded or enjoyed by the user, can be sensed, or otherwise detected, and saved as metadata for the content file. The extra information is saved either in the content file itself, along with the content file itself in an associated file, or saved in a way in which the information relates to the content file.

This allows new possibilities for the identification and enjoyment of relevant content files by the user because it allows information about the circumstances or environment in which content is created or enjoyed to be recorded and saved along with the content. By saving this extra data as metadata it can be arranged to follow the original content file and therefore can always be used to identify and access the content. A system is therefore created by which the content file can be accessed by reference to the circumstances under which it was created, or previously accessed or enjoyed.

In an embodiment the device also comprises a memory or other form of storage, or has access to a form of storage device, in which the content file can be stored. The new content file with metadata is stored in memory, or alternatively on disk. Alternatively, the new content file with metadata could be sent immediately to another device upon creation of the metadata. In a particular embodiment the file with or containing the meta-data is stored during creation, at least temporarily, on a disk or in memory, before it is sent or copied to another storage system.

In an embodiment the device is one of a content player; a media player; a photo viewer; a video player; a music player; a digital audio player; a mobile device; a smartphone; a game console; a tablet; a laptop; a personal computer. In further embodiments the device can be an iPod, iPad or a smart watch or other smart wearable device.

In an embodiment the device includes an application arranged to play content. The application can be a native or hardware application, an application fixed in hardware, or software, or firmware, or an imported or downloaded application, sometimes referred to as an 'app'.

In an embodiment the sensor can be arranged to acquire or record data on any one of temperature, light intensity, average light colour, λmax (the wavelength of maximum absorbance in the spectrum), sound, air humidity, pressure (for example air pressure or water pressure), heart-beat, blood glucose, blood pressure, location, speed of the device, or acceleration of the device. For example, temperature can be measured in Celsius or Fahrenheit; light colour can be measured with recourse to wavelengths, or relative wavelengths of red-yellow-blue, or in average wavelength, by measuring in nanometres (nm); sound can be measured in decibels (dB, dBA); heartbeats can be measured in beats per minute, blood glucose can be measured in mmol/L or mg/dL; blood pressure is usually measured in mm of mercury but can be measured in any unit suitable for the blood pressure monitor which is used; location can be measured, or calculated, with reference to a geolocator or other locator or location finding device; velocity or speed of the device can be measured in metres per second (m/s); acceleration can be measured in metres per second squared (m/s^2). Measurement of various phenomena can be measured or sensed using known sensor technology. For example, acceleration can be measured by an accelerometer either incorporated into or attached to the device.

In a further embodiment the sensor can be built into the device but in alternative embodiments can be attached or coupled to the device either physically and/or electronically. Embodiments of coupling include for example Wi-Fi, HDMI, Bluetooth, USB, BNC Coax connector. The sensor data can in fact be any data recorded by a sensor during play or play back of a content file.

The invention also relates to a method of creating a content file on a device. The method is suitable for use by a device working the method or by a software package or an application package arranged to perform the method. In an embodiment the application package may be comprised on an electronic device such as a content player; a media player; a photo viewer; a video player; a music player; a digital audio player; a mobile device; a tablet; a laptop; a personal computer; a game console. However in a further embodiment the software package or application package may be distributed over an arrangement of nodes and devices, for example a device coupled to a node, for example a home gateway.

In an embodiment the method includes playing the content file for experience by the user, acquiring sensor data during the playing of the content file, creating metadata derived from or representing the acquired sensor data, and associating the metadata with the content file.

In an embodiment the metadata replaces previously created metadata, or is written over previously created metadata. This has the advantage that storage space for the content file and its associated metadata is minimised and additionally has the separate advantage that content files can be kept up to date with the most recent sensor data, or sensor data from the most recent playing of the content file.

In an embodiment the metadata can be added to previously created metadata. For example if previous metadata was derived from a light sensor and new sensor data is acquired from a thermometer or other temperature sensing device.

In an alternative embodiment a lock can be included on the metadata to stop it from being changed. This has the advantage that the user can choose to keep a version of metadata that is particularly relevant or interesting. In this way the user can choose to keep metadata representing a particular experience of the content file. In an embodiment the lock can be a flag. In an alternative embodiment the lock can be a an attribute within the metadata file. Typically a flag is something the operating system can handle whereas something in the metadata file can be read from a content processor.

The invention also relates to a file arrangement for an electronic device. The file arrangement comprises content for playing on the electronic device, metadata associated with the content, wherein the metadata comprises data derived from or representing sensor data acquired during a previous playing of the content.

In an embodiment the metadata is comprised in the content file itself. In a further embodiment the metadata is included in the header of the content file. This has the advantage that the metadata can never be lost or become disassociated with the content file.

In an embodiment the metadata is comprised in a separate file which is associated with the content file. In a further embodiment the separate file may be stored along with the content file. This has the advantage that more complex arrangements of metadata, and potentially very long arrangements of metadata, can be stored without impacting on how the original content file is stored. In this embodiment care must be taken to ensure that the associated metadata file maintains a connection to the content file.

The invention also relates to an application package to play a content file in which the application package comprises a data acquisition component arranged to acquire data through a sensor, a player to play the content file, and a processing component arranged to create metadata for the content file. The data acquisition component is arranged to acquire data through the sensor during playing of the content file, and the processing component is arranged to create metadata comprising the acquired data derived and is further arranged to associate the metadata with the content file.

In an alternative embodiment the application package is arranged to create a content file, for example to create a photograph file from raw camera data, or record or create a music file from a live recording. In this embodiment the application package comprises a data acquisition component arranged to acquire data through a sensor; a first processing component to create the content file; and, a second processing component arranged to create metadata for the content file. The data acquisition component is arranged to acquire data through the sensor during creation of the content file, and the second processing component is arranged to create metadata comprising the acquired data derived and is further arranged to associate the metadata with the content file created by the first processing component.

In further embodiment the application package, whether for playing or creating the content file, may include a sensor component.

The module can be a software module.

In an embodiment the application package is arranged to store the metadata by overwriting previously created metadata.

In an embodiment the metadata is in a form prescribed by an XMP standard, although this is not necessary and other standards are possible. In particular an independent solution for metadata may be used.

In an embodiment the metadata associated with the content file is comprised in the content file.

The invention provides a way to enrich content with sensor data which describes circumstances around a playing, or playback, of the content. The metadata relates to a situation in which the user has played, played back, accessed, browsed, or rendered the content file. The invention thereby offers new opportunities to enjoy and use content.

These and other embodiments are described further in the figures.

### Figures

Figure 1 shows an embodiment of the invention.
Figure 2 shows an alternative embodiment of the invention.
Figure 3 shows an embodiment of the invention.
Figure 4 shows a file arrangement used in the invention.
Figure 5 shows an embodiment of the invention.
Figure 6 shows an embodiment of the invention.
Figure 7 shows an embodiment of the invention.
Figure 8 shows an embodiment of the invention.
Figure 9 shows an embodiment for creating metadata according to the invention.

### Detailed Description

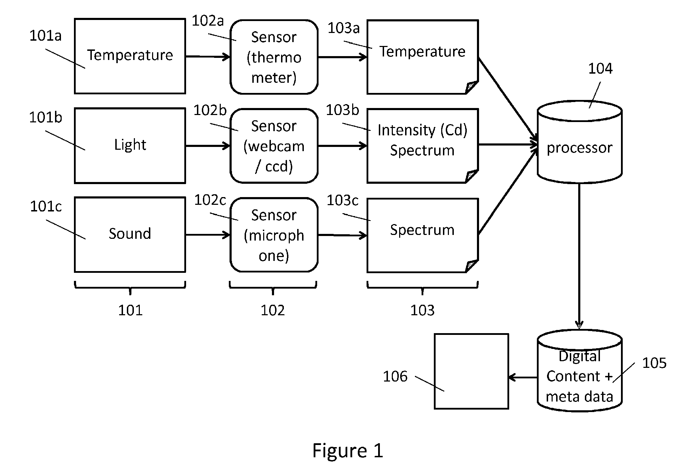

Fig. 1 shows a general embodiment of the invention in which sensor enriched content is added to a content file in the form of metadata.

Physical properties 101 available during the playing, playback or presentation on a device of the content in a content file, or during the recording or creation of the content file, and include as an example temperature 101 a, light 101b and sound 101 c. Physical properties 101 can be measured using sensors 102. For example temperature 101 a can be measured using a sensor thermometer 102a, light 101b can be measured using a sensor in a webcam 102b, and sound 101c can measure using a sensor microphone 102c. As an alternative, light can be measured using another light sensor 102b present in the playing device.

Sensors 102 produce sensor data 103. For example sensor thermometer 102a produces temperature data 103a, webcam sensor 102b produces light spectrum data 103b for example a light intensity spectrum, and sensor microphone 102c produces a sound spectrum 103c.

Sensor data 103 is passed to processing unit 104 which uses the sensor data 103 to create metadata 105 associated with, coupled to or attached to content file 106.

The physical properties 101 which are measured by sensor, or sensors, 102 are measured during the playing, or playback, or presentation of content file 106 to the user, or during the accessing of the content file 106 by the user, or during the creation or original recording of the content file 106 by the user.

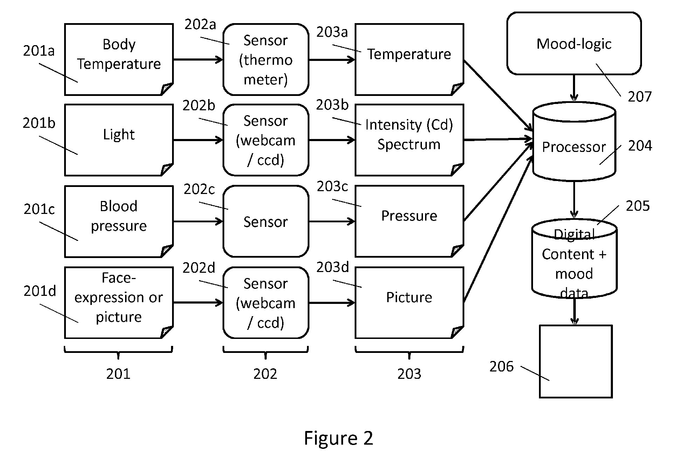

Figure 2 shows an alternative embodiment of the invention. As previously, physical properties 201, including temperature 201 a, light 201b and sound 201c, are recorded during playing or playback of content file 206, or during creation or recording of the content file 206, by sensors 202 including sensor thermometer 202a, webcam sensor 202b, and sensor microphone 202c. The sensor data 203 produced, including temperature data 203a, light spectrum data 203b and sound spectrum 203c, is passed to processing unit 204 which uses the sensor data 203 to create metadata 205 associated with, coupled to or attached to content file 206. However in this example facial expression 202d can also be detected using, for example, a webcam 202d in the device used for playing the content file 206. In this case webcam 202d produces an image 203d which is passed to processing unit 204 and mood logic 207, which may be incorporated into processing unit 204, or which may be separate, is used to analyse image 203d to produce mood data allowing processing unit 204 to include user mood in the metadata 205 created as a result of the acquired sensor data.

The physical properties 201, including mood 201d, which are measured by sensor, or sensors, 202 are measured during the playing, or playback, or presentation of content file 206 to the user, or during the accessing of the content file 206 by the user, or during the creation or recording of the content file 206 by the user.

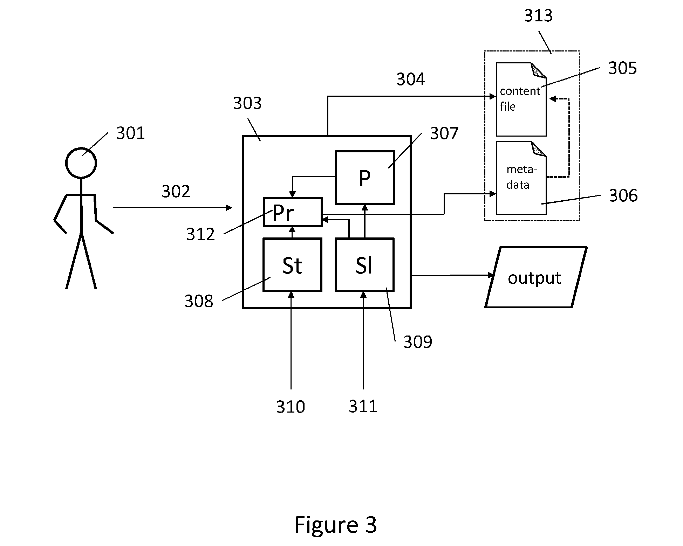

Figure 3 shows an embodiment of the invention. User 301 opens, runs up or otherwise starts 302 device 303, which may be a media device or player, a content player, a photo viewer, a video player, a music player, a digital audio player, a mobile device, a smartphone, a game console, a tablet, a laptop or a personal computer, a smartwatch or other wearable device for example. Using device 303 the user 301 selects 304 content file 305 to play and plays it. Content file 305 may be associated with metadata 306, although this is not necessary. Metadata 306 may not yet exist.

Device 303 plays, plays back, or otherwise presents content file 305 for the enjoyment of user 301 by using player 307 to provide the content of content file 305 as output. Player 307 may be a media player, a sound file player, a photo viewer, a video codec program or other application, or application package, or component which allows user 301 to watch, see, listen to, record, create or otherwise experience the contents of content file 305. During playing of content file 305 sensors 308 and 309 measure properties 310 and 311 which are recorded as data and provided to processing unit 312. Processing unit 312 produces metadata 306 which is either inside content file 305 or associated with it, for example as separate metadata file 306, stored with content file 305 as duplex 313 either in or within player 303 or in some way accessible by player 303. In an embodiment player 307 provides the content to processor 312 for the addition of metadata.

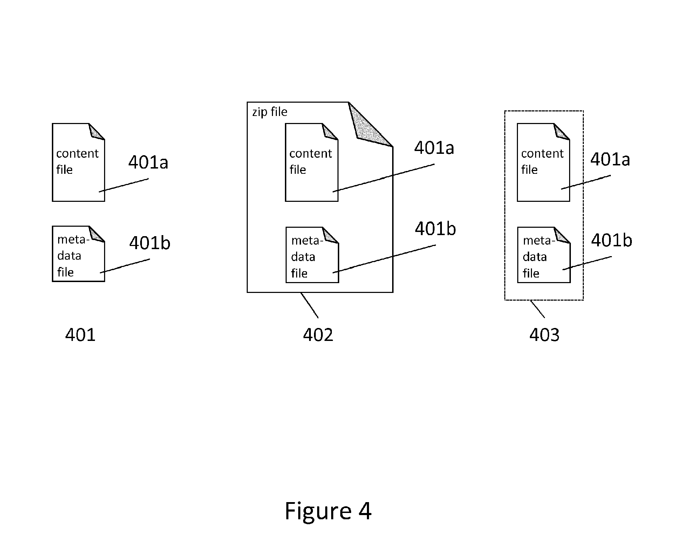

Figure 4 shows a file arrangement 401 which can be used in the invention. File arrangement 401 includes content file 401a and metadata file 401 b. In an embodiment the contents of the original content file 401 and the original file name will not be changed. The metadata file can be, for example, a metadata file using the XML-format, in which case the filename of metadata file 401b is the same as the file name for content file 401 a but in th is instance with a .xml file extension.

Content file 401 a and metadata file 401b can be combined into one file 402 for transport. File 402 can be a zip file which may or may not be created according to a zip file standard and may or may not have a proprietary zip file extension.

When being stored the two files, content file 401a and metadata file 402

The device or player handles the combined file 402 as two files 403, the first 401 a for playing the content and the second 401 b which comprises metadata, and which are associated with each other.

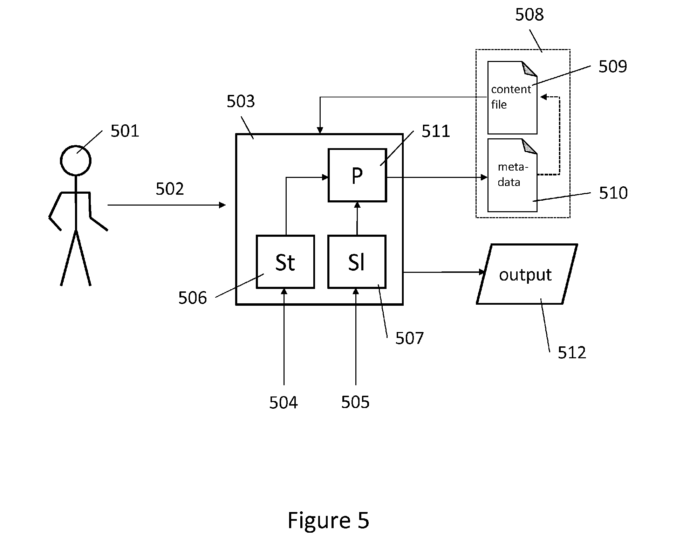

Figure 5 shows an embodiment of the invention in which user 501 opens, runs up or otherwise starts 502 device 503, which may be a media device or player, a content player, a photo viewer, a video player, a music player, a digital audio player, a mobile device, a smartphone, a game console, a tablet, a laptop or a personal computer, a smartwatch or other wearable device for example. The functionality of device 503 may also be rendered in an application package.

Device 503 is arranged to play, plays back, or otherwise present a content file 509 for the enjoyment of user 501 by using player 511. Content file 509 is associated with metadata 510 which is shown stored along with content file 509 in a separate metadata file, the two forming duplex 508. In an alternative embodiment metadata can be stored inside the content file 509. Content file and associated metadata may be stored on device 503 or may be stored in alternative storage to which device 503 has access.

Device 503 includes player 511 which in an embodiment may be a media player, a sound file player, a photo viewer, a video codec program or other application, or application package, or component which allows user 501 to watch, see, listen to, record, create or otherwise experience the contents of content file 509.

In embodiments, while device 503 is turned on, or while player 511 is turned on, sensor data 504 and 505 are detected by sensors 506 and 507. For example 504 might be temperature and 506 might be a thermometer or other temperature sensing device, and 505 might be ambient light intensity and 507 might be a light sensor. Two sensors are shown but in embodiments there may be only one sensor or there may be more than two.

In an embodiment user 501 may select a file 509 for play and processor 513 compares associated metadata 510 to see if there is a match between the metadata and the sensor data detected by either or both of sensors 506 and 507. If there is a match, or a sufficient match, player 511 plays the file. If there is no match the file is not played and in a further embodiment the user may be prompted to choose or select another file.

In an alternative embodiment Processor 513 reads the sensor data produced by sensors 506 and 507 and accesses or directly reads the metadata associated with content file 509. If the processor determines that the metadata matches, or matches sufficiently, the sensor data detected by the sensors then the processor offers content file 509 to the user 501 for play by the player 511.

In a particular embodiment processor 513 compares sensor data detected by sensors 506 and 507 with metadata stored in files 510, or alternatively stored directly in content files 509. In each case if no match is found a second file is selected for analysis and processor 513 continues until a match is found. When a match is found the relevant content file can be offered to the user or, in an alternative embodiment the player 511 starts playing the content file automatically.

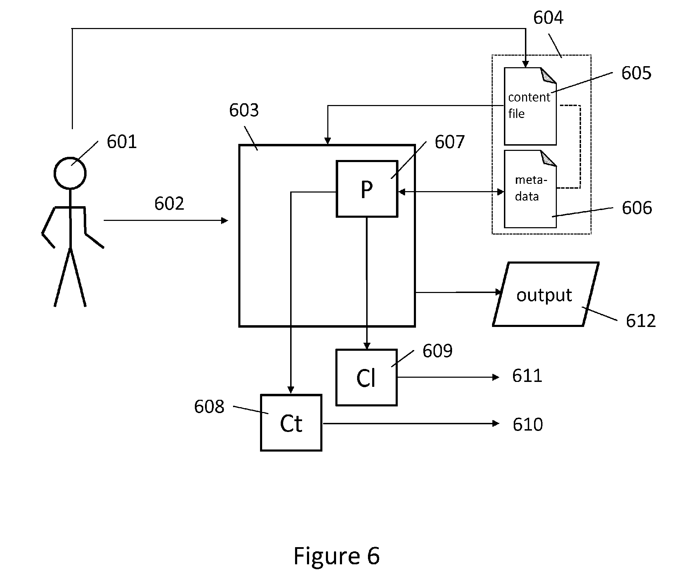

Figure 6 shows an embodiment of the invention in which user 601 opens, runs up or otherwise starts 602 device 603, which may be a media device or player, a content player, a photo viewer, a video player, a music player, a digital audio player, a mobile device, a smartphone, a game console, a tablet, a laptop or a personal computer, a smartwatch or other wearable device for example. The functionality of device 603 may also be rendered in an application package.

Device 603 is arranged to play, plays back, or otherwise present a content file 605 for the enjoyment of user 601 by using player 607. Content file 605 is associated with metadata 606 which is shown stored along with content file 605 in a separate metadata file, the two forming duplex 604. In an alternative embodiment metadata can be stored inside the content file. Content file and associated metadata may be stored on device 603 or may be stored in alternative storage to which device 603 has access.

In an embodiment player 607 may be a media player, a sound file player, a photo viewer, a video codec program or other application, or application package, or component which allows user 601 to watch, see, listen to, record, create or otherwise experience the contents of content file 605.

In embodiments while device 603 is turned on, or while player 607 is turned on, ambient conditions are detected by a sensor or sensors 613, 614 to produce sensor data. Processor 613 reads the sensor data and accesses or directly reads the metadata associated with content file 605. If the processor determines that metadata matches, or matches sufficiently, the sensor data then the processor offers content file 605 to the user 601 for play by the player 607. However, in the event that the user plays the content file 605 that is offered, and the metadata only partially matches the sensor data detected by sensors 614, 615, processor 613 can control the ambient environment of user 601 by using the metadata to control ambient controllers 608 and 609 to produce ambient features 610 and 611 to bring them into conformity with the metadata which is stored and associated with content file 605. In alternative embodiments the user may select file 605 themselves and processor 613 may analyse metadata associated with the selected content file and control ambient controllers 608 and 609 to produce ambient features 610 and 611 to bring them into conformity with the metadata which is stored and associated with content file 605.

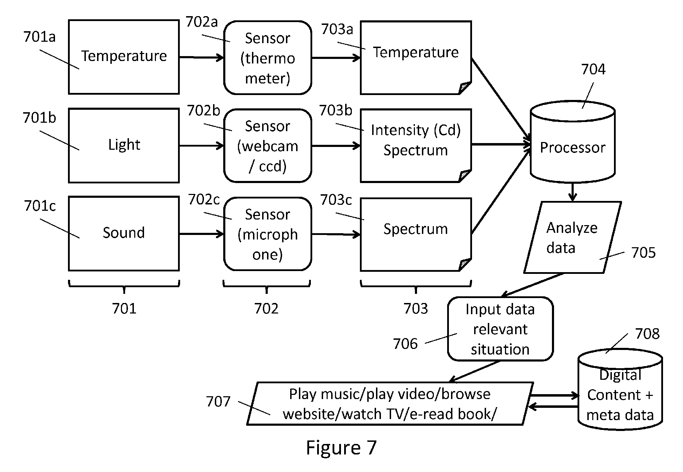

Figure 7 shows an alternative embodiment of the invention. Sensor enriched content is added to a content file in the form of metadata and used to select the content file for playing or play back.

Physical properties 701 available while a content player or content playing device is active or running include as an example temperature 701a, light 701b and sound 701c. Physical properties 701 can be measured using sensors 702. For example temperature 701 a can be measured using a sensor thermometer 702a, light 701 b can be measured using a sensor in a webcam 702b, and sound 701 c can measure using a sensor microphone 702c. As an alternative, light can be measured using another light sensor 702b present in the playing device.

Sensors 702 produce sensor data 703. For example sensor thermometer 702a produces temperature data 703a, webcam sensor 702b produces light spectrum data 703b for example a light intensity spectrum, and sensor microphone 702c produces a sound spectrum 703c.

Sensor data 703 is passed to processing unit 704 which analyses 705 the data and looks for similar or equivalent data 706 in stored metadata associated with content files. The metadata associated with the content files represents sensor data previously detected and stored, and in an embodiment can represent environmental circumstances or features during a previous playing of the content. If similar metadata is found or identified the associated content file is offered for play 707. Content can be selected from storage 708 and offered for play multiple times based on detection of new sensor data which aligns with or is similar to previously stored data as metadata.

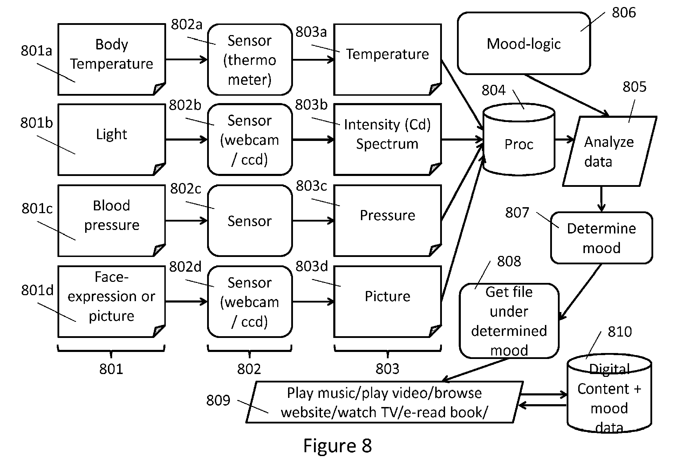

Figure 8 shows an embodiment of the invention. Sensor enriched content is added to a content file in the form of metadata and used, along with mood data, to select the content file for playing or play back.

Again, physical properties 801 available while a content player or content playing device is active or running include as an example temperature 801a, light 801b and sound 801c, recorded by sensors 802 including sensor thermometer 802a, webcam sensor 802b, and sensor microphone 802c. The sensor data 803 produced, including temperature data 803a, light spectrum data 803b and sound spectrum 803c, is passed to processing unit 804 analyses 805 the sensor data 803 and looks for similar or equivalent sensor readings stored as metadata associated with a content file. However in this example facial expression 802d can also be detected using, for example, a webcam 802d. In this case webcam 802d produces an image 803d which is passed to processing unit 804 and mood logic 806, which may be incorporated into processor 804, or which may be separate, is used to analyse image 803d to produce mood data allowing processing unit 804 to include user mood in analysis 805. The processor therefore determines mood 807 and coupled with the remaining sensor data can select a content file more properly suited to the calculated mood of the user.

The metadata associated with the content files represents sensor data previously detected and stored, and in an embodiment can represent environmental circumstances or features during a previous playing of the content. If similar metadata is found or identified the associated content file is offered for play 809. Content can be selected from storage 810 and offered for play multiple times based on detection of new sensor data which aligns with or is similar to previously stored data as metadata.

In an embodiment mood can be an overall indicator for the full length of the file or for just a part of the file. Mood can be stored as a pre-determined value in the metadata.

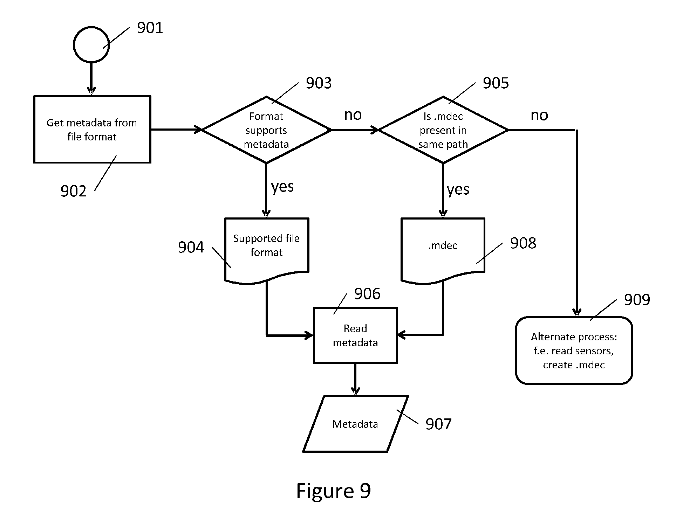

Figure 9 shows an embodiment for creating metadata according to the invention. In a typical embodiment the metadata is stored using the XMP standard or alternatively using an XML format. In an embodiment the metadata is stored in a separate file with filename identical to the name of the content file but with a different file extension. In an embodiment the file extension may be a .mdec extension.

Using an XML format the data format can be specified in an XML schema, a DTD format (document type definition format) or an XSD format (XML schema definition).

When searching for metadata the processor may perform the following steps. In 901 the processor accesses available storage and gets metadata 902 in the format in which it is stored. The processor analysis the format of the metadata 903 and if the processor supports the metadata format used 904 it reads the metadata 906 and performs whatever action is required 907. The required action may be to compare the metadata with detected sensor data and if there is congruence or some degree of similarity offer the associated content file to the user for play. Alternatively the required action may be to use the metadata, or part of the metadata, to control an ambient controller to bring an ambient feature, such as lighting, humidity, temperature etc. into conformity with data stored in the metadata.

If the format of metadata 903 is not supported then the processor can, in an embodiment, check if an .mdec file is present in the same path 905, and if it is 908 read this instead 906 to perform the required action 907. If an .mdec file 905 is not present then the processor can, in an embodiment, embark on an alternative process 909 of translating the metadata into a readable format, or alternatively reading the sensor data and creating a new metadata file, for example an .mdec file. Once an .mdec file or alternatively readable metadata file has been created the processor can read it 906 and perform the appropriate action 907.

In an embodiment the file can be an .xml file.

In all embodiments metadata may be included in the content file itself, or in a separate metadata file associated with the content file, and may be created using any method of creating metadata. An independent method of creating metadata can also be used.

As an example of a possible embodiment of metadata, presented in this instance using Extensible Markup Language (XML), sensor data may be recorded as metadata using the following example shown in Table 1.

Table 1 shows an example of data in a form suitable for metadata according to the description. The fields, items and units of measurement are not limited to those shown and the flexibility of XML allows for this.

**Table 1. An example of suitable metadata written in XML**

| Line no. | Content |
|---|---|
| 1 | <?xml version="1.0" encoding="utf8"?> |
| 2 | <contentMetaData name="myContentMetaData" xml:lang="en"> |
| 3 | <sensorInput> |
| 4 | <sensor name="AmbientTemperatureSensor"> |
| 5 | <sensorType>Temperature</sensorType> |
| 6 | <sensorUnit>Celsius</sensorUnit> |
| 7 | <sensorData> |
| 8 | <fullLength>true</fullLength> |
| 9 | <description>Ambient temperature</description> |
| 10 | <value>21 </value> |
| 11 | </sensorData> |
| 12 | </sensor> |
| 13 | <sensor name="HeartbeatSensor"> |
| 14 | <sensorType>Heartbeat</sensorType> |
| 15 | <sensorUnit>bpm</sensorUnit> |
| 16 | <sensorData> |
| 17 | <fullLength>false</fullLength> |
| 18 | <description>Horror scene</description> |
| 19 | <startTime>1:24:30</startTime> |
| 20 | <endTime>1:24:50</endTime> |
| 21 | <value>95</value> |
| 22 | </sensorData> |
| 23 | </sensor> |
| 24 | <sensor name="MicrophoneSensor"> |
| 25 | <sensorType>Sound</sensorType> |
| 26 | <sensorUnit>dB</sensorUnit> |
| 27 | <sensorData> |
| 28 | <fullLength>false</fullLength> |
| 29 | <description>Scream of fear</description> |
| 30 | <startTime> 1:24:36</startTime> |
| 31 | <endTime>1:24:41</endTime> |
| 32 | <value>127</value> |
| 33 | <rawData>externalFileWithScreamsOfFearRecording.mp3</rawData> |
| 34 | </sensorData> |
| 35 | </sensor> |
| 36 | </sensorInput> |
| 37 | <controlOutput> |
| 38 | <environmentControl name="RoomTemperature"> |
| 39 | <environmentControlType>Temperature</environmentControlType> |
| 40 | <environmentControlUnit>Celsius</environmentControlUnit> |
| 41 | <environmentControlData> |
| 42 | <fullLength>true</fullLength> |
| 43 | <description>Ambient room temperature</description> |
| 44 | <value>24</value> |
| 45 | </environmentControlData> |
| 46 | </environmentControl> |
| 47 | <environmentControl name="RoomLight"> |
| 48 | <environmentControlType>Light</environmentControlType> |
| 49 | <environmentControlUnit>Lux</environmentControlUnit> |
| 50 | <environmentControlData> |
| 51 | <fullLength>true</fullLength> |
| 52 | <description>Ambient light</description> |
| 53 | <value>50</value> |
| 54 | </environmentControlData> |
| 55 | </environmentControl> |
| 56 | <environmentControl name="RoomLightColor"> |
| 57 | <environmentControlType>LightColor</environmentControlType> |
| 58 | <environmentControlUnit>#RRGGBB</environmentControlUnit> |
| 59 | <environmentControlData> |
| 60 | <fullLength>false</fullLength> |
| 61 | <description>Walk in the dark alley</description> |
| 62 | <startTime>1:24:36</startTime> |
| 63 | <endTime>1:24:41</endTime> |
| 64 | <value>#60537A</value> |
| 65 | </environmentControlData> |
| 66 | </environmentControl> |
| 67 | </controlOutput> |
| 68 | </contentMetaData> |

In the information in Table 1 line numbers are added to the beginning of the line to explain the different sections and content of the file. As is known to the skilled person these line numbers and the following "|" character are not part of the actual file.

The first two header lines (01 and 02) of the file indicate that the content of the file will be XML-formatted, encoded in the UTF-8 character set and the default language of is English.

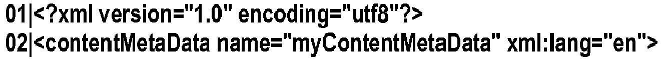

In this example the attribute name is set to myContentMetaData but in an embodiment it can be set to the name of the linked content file. Preferably the name of the xml-file should be set to the name of the content file but with a different extension, as is known in the art.

As will be understood by the skilled person this example file can easily be enhanced with extra information including references back to the content file, its creation date, the last time sensor data was added, the last time the content file was played, et cetera.

In this example we include simple data from three sensors, a temperature sensor, a heartbeat sensor, or heart monitor, and a microphone.

Information can be stored in an XML-file in two different ways, stored "inline" as attributes or stored within tags.

For example the line 2 name="myContentMetaData" is the inline form while line 3 shows the opening tag <sensorlnput> and line 36 </sensorlnput> shows the closing tag of the enclosed information. Tags indicate sections, which can contain subsections or data/information.

After the header lines the file consists of a main section <sensorlnput> with subsections headed <sensor> and it can be seen in this example that the sensorlnput section starts at line 3 and ends at line 36. This section can contain one or more sensor subsections. The subsections have a name attribute to give a descriptive name of the sensor. In the sample below we see three sensor subsections: AmbientTemperatureSensor sensor section (lines 4-12); HeartbeatSensor sensor section (lines 13-23); MicrophoneSensor sensor section (lines 24-35).

The first sensor data stored in the file is sensor data from a temperature sensor.

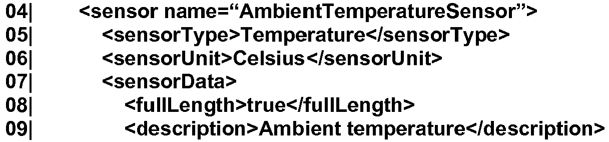

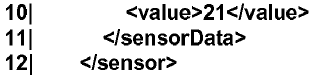

The recorded temperature data from a temperature sensor or thermometer is stored in this section. In an embodiment the AmbientTemperatureSensor section may comprise the following subsections: sensorType (line 5), comprising the type of sensor, in this case a temperature sensor; sensorUnit (line 6), comprising the unit of measurement, in this case Celsius, it an alternative embodiment it could be stored using another unit of temperature; and, sensorData (lines 7-11 which is where the sensed data values are inputted.

The subsection sensorData (lines 7-11) within the AmbientTemperatureSensor section may comprise several subsections including: fullLength (line 8), comprising a Boolean value (true/false), in which "true" indicates that the value is valid for the full play length of the media file and in which "false" indicates that the value is not valid for the full play length of the media file; description (line 9), comprising the description of the recorded sensor data; value (line 10), which comprises the recorded temperature in degrees Celsius.

In this example the value under **full length** is set to 'true' and this indicates that the temperature value measured remained valid throughout the playing of the file, in other words was neither rising nor falling to within the accuracy with which it can be measured by the sensor.

In another embodiment, the sensor data is measured at a small time interval throughout a certain time of the file duration or during the complete duration. In this case, the values of the sensor are recorded at a certain time-stamp, which can be absolute time, or any user understand or commonly accepted time such as BST, CET, EST etc, or relative to the start of the play of the file. In this case, if the interval is 1 second and the play-time was 45 minutes, then 2700 sensor data-values (data points, consisting of a time-sensorvalue pair) are recorded in the file.

In a further embodiment the processing unit may be arranged to input a value representative of the sensor data. For example, the actual data recorded by the sensor might have been fluctuating within a certain temperature range during playback of the content file so the value recorded may also be the average of the recorded data in certain embodiments.

Similar data and information is included for a second sensor, in this example a heartbeat sensor.

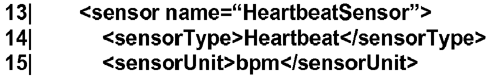

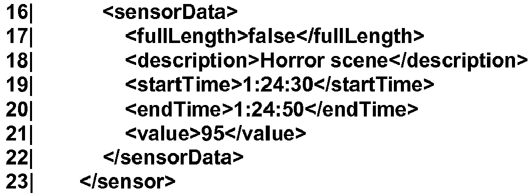

The subsection sensorData (lines 16-22) within the HeartbeatSensor section has the same subsections with different data. The fullLength field (line 17), comprises the Boolean value false and indicates that the heartbeat is recorded during a certain timeframe during the playback or creation of the media file and not during entire playback or creation. The description field (line 18), comprises the description of the recorded sensor data. The media file is in this case a horror movie and in this example is one of the scary scenes. The startTime field (line 19) comprises the start time of the rise of the heart rate and the endTime field (line 20) comprises the end time of the risen heart rate. The value field (line 21) contains the recorded heartbeat rate itself. The heartbeat rate is most likely elevated due to the nature of the scene.

Similar data and information is included for a third sensor, in this case a sound sensor, or microphone, which can be used to record ambient sounds during the playing or play out, or enactment of a content file, or during its creation. In a further embodiment if the device were to comprise more than one sound sensor, i.e. to be connected or coupled to more than more microphone, then additional sound can be recorded during the recording of a sound file. For example, a recording can be made of a group of musicians playing together and a further recording made of the reaction of a further group of people listening to the playing.

However in this embodiment shown the metadata describes sound recorded during the playing of a film or video.

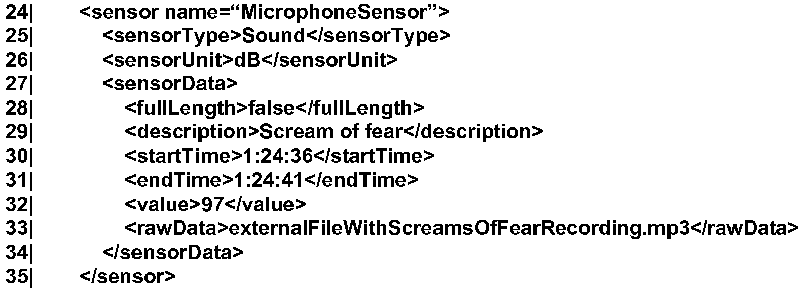

In this embodiment the subsection sensorData (lines 27-34) within the MicrophoneSensor section comprises similar subsections as the embodiments above but comprises an additional subsection with a link to an external file: rawData (line 33). In this example and during playback of the media file someone in the audience screamed, this scream was recorded during the startTime and the endTime. The recorded sound was saved as a file with the name:

### externalFileWithScreamsOfFearRecording.mp3

Sound can be recorded throughout the play out of a file, or, alternatively, only recorded when ambient sound is recorded which is louder than a certain predetermined threshold. In this example an ambient scream was recorded during the playing of a file, a video for example, and in this case the sound recorded is given a **full length** false value because sound was not recorded over the full play out of the content file. Start and end times of the recorded sound are provided and a raw file of the sound is included in the metadata. The sound is measured in dB.

The metadata thus included can be used to record pertinent sensor data surrounding the playing of a content file and to store it such a way that it can be easily associated with the content file and can be stored with it and can travel with it, for example from device to device.

In general the sensorInput section contains data that is recorded during playback of the media file. The sensorInput section describes what and how the environment is recorded.

In an embodiment mood can be stored as a value in a <mood> tag.

In a particular embodiment the metadata can have two sections, an input section and an output section. The input section stores recorded metadata and in an embodiment may be used simply for reading the data and comparing to newly acquired sensor data to decide whether or not to offer a content file to the user. In an embodiment the output section may be used by the processor to store data suitable for control of an environment. As such the data stored in the input section may be further processed before also storing in the output section.

In other words metadata comes in two formats, a recording format and a controlling format, the recording format stored in an input section and the controlling format stored in an output section. Sensor data can be recorded during play out or even during recording of the content file and inserted into metadata related to the content file in an input section. This metadata can be used directly to select the content file when the same or similar conditions reoccur or are recreated.

Alternatively original metadata can be reformulated into new metadata, which can be derived from the original metadata and used for environmental control. For example new metadata can include the average of original metadata, an indication of whether temperature rises or falls etc. This new metadata is the usable control data and can be used to fine tune whether a content file is selected for a particular set of conditions, and also used to fine tune the ambient environment.

In Table 1 the controlOutput section starts at line 37 and ends at line 67 and this section can contain one or more environmentControl subsections. The subsections have a name attribute to give a descriptive name of the environment variable. In general the controlOutput section contains data to control parts of the environment where the media file is played. The controlOutput section describes what to change in the environment. In an embodiment the user can always override the control of these environment variables.

In the sample below we see three environmentControl subsections.

The first control section is RoomTemperature section (lines 38-46)

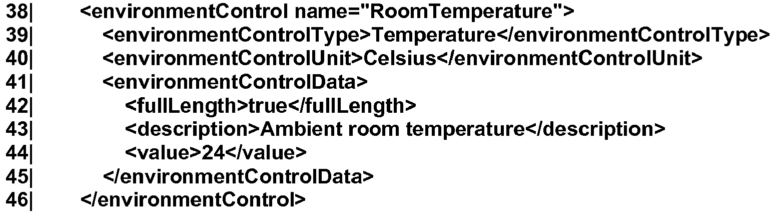

In this section we see the following subsections:
- environmentControlType (line 39), contains the environment variable to control. In this case it's the temperature.
- environmentControlUnit (line 40), contains the unit in which the data is stored. In this case it is Celsius.
- environmentControlData (lines 41-45), contains the actual values.

The subsection environmentControlData (lines 41-45) within the RoomTemperature section contains the following subsections:
- fullLength (line 42), which comprises a Boolean value (true/false). True indicates the value is valid for the full play length of the media file. False indicates that the value is not valid for the entire or full length of play of the content or media file. For example the stored data may have been recorded or detected for a section of the previous play out of the content file.
- description (line 43), contains the description of the environment variable. In this case this is the ambient room temperature.
- value (line 44), contains the temperature value of 24. It's the temperature in degrees Celsius.

In short this section controls the room temperature, it is set to 24 degrees Celsius during playback of the media file.

The second control section is RoomLight section (lines 47-55)

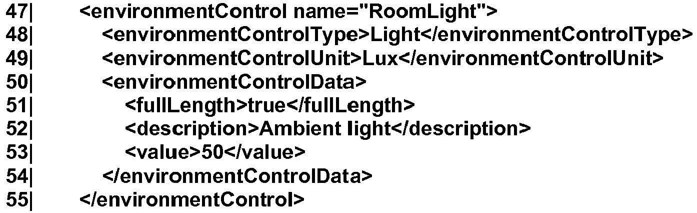

The RoomLight section (lines 47-55) is similar to the RoomTemperature section, it contains the same subsections but it sets the ambient light of the room to a value of 20 Lux.

The third control section is RoomLightColor section (lines 56-66)

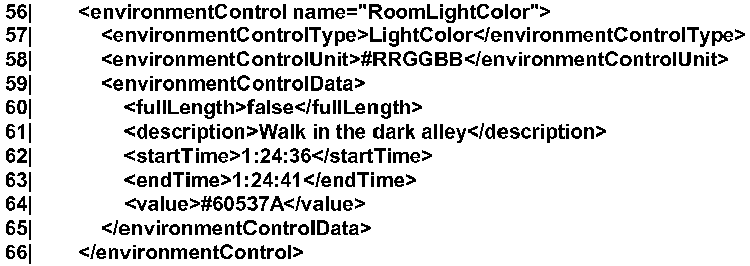

The RoomLightColor section (line 56-66) sets the colour of the environment lighting during a certain timeframe. The subsections environmentControlType (line 57) and environmentControlUnit (line 58) are similar to the subsections in the RoomTemperature and RoomLight sections.

The subsection environmentControlData (lines 59-65) describes the timeframe:
- fullLength (line 60), contains the Boolean value false. In this example this indicates that the light colour needs to be changed from the current value to the new value during the defined timeframe.
- description (line 61), contains the description of the data. In this example the media file a horror movie and the scene describes a scary scene, in this case one in which the main character walks into a dark alley.
- startTime (line 62), contains the start time where the light could be changed to a new value, for example the value of the stored.
- endTime (line 63), contains the end time where the light could be changed back to the state before the start time.
- value (line 64), contains the new light colour. The colour is set to a dark environment very suitable for a scary scene.

In this way an ambient light controller can be controlled to reproduce the same lighting conditions as seen when the film was played.

In a further embodiment the sensorInput section comprises a section in which generic data is recorded, for example based on the average of several personal sections. In this embodiment sensor data recorded as metadata is recorded and stored per user, in the sense that data refers to the playback experience of a particular user. In a further embodiment a generic section is created from the data in various aggregated personal sections. New personal sections can be added as different users play and experience the content of the file but in specific embodiment only one generic section contains the aggregated data from a subset of, or the total of, personal sections. Over time the generic section acquires data from an average audience. As the data from the sensorInput section is used for playback a group average can be derived from it.

The public sections can be enhanced with personal profile information from the recording, type of person, social status, music or movie preferences of individual users. This extra information can also be used during playback of the media file.

The invention as described allows information about the circumstances and surroundings during the playing of a content file to be recorded.

## Claims

1. Device arranged to play a content file with metadata and which metadata comprises data representing sensor data acquired during a previous playing of the content file, the device comprising:
- a player for playing the content file for experience of the content by the user;
- a sensor arranged to acquire sensor data;
- a processing unit; and wherein
- the processing unit is arranged to offer the content file for play by the player in dependence upon comparison between the metadata and sensor data acquired by the sensor.

2. A device according to claim 1 wherein the comparison between metadata and sensor data is based on whether the difference between the metadata and the sensor data is within a predetermined threshold.

3. A device according to claim 1 wherein the sensor is arranged to acquire sensor data during real time while the player is active.

4. A device according to claim 1 wherein the player is an application running on the device and the sensor is arranged to acquire sensor data when the application is running.

5. A device according to claim 1 wherein the device is one of a content player; a media player; a photo viewer; a video player; a music player; a digital audio player; a mobile device; a tablet; a laptop; a personal computer; a Set Top Box.

6. A device according to claim 1 wherein the sensor can record data on any one of temperature, pressure, light intensity, average light colour, Amax, maximum wavelength intensity, sound, air humidity, heart-beat, blood glucose, location, speed of the device, or acceleration of the device.

7. Method of offering a content file to a user for play by a player, wherein the content file is associated with metadata comprising data representing sensor data acquired during a previous playing of the content file, the method comprising the steps:
- acquiring sensor data via a sensor;
- reading the metadata via a processor;
- offering the content file for play by a player in dependence upon comparison between the metadata and sensor data acquired by the sensor.

8. Method of playing a content file, comprising the steps:
- acquiring sensor data during a playing of a content file;
- creating metadata based on the sensor data;
- associating the metadata with the content file;
- acquiring new sensor data;
- identifying the content file based on a comparison of the new sensor data with the metadata.

9. A method according to claim 8 wherein the metadata is written over previously created metadata.

10. An application package arranged to play a content file with metadata and which metadata comprises data representing sensor data acquired during a previous playing of the content file, the application package comprising:
- a player for playing the content file for experience of the content by the user;
- a sensor component arranged to receive sensor data from a sensor;
- a processing component; and wherein
- the processing component is arranged to offer the content file for play by the player in dependence upon comparison between the metadata and sensor data received by the sensor.

11. An application package according to claim 10 wherein the comparison between metadata and sensor data is based on whether the difference between the metadata and the sensor data is within a predetermined threshold.

12. An application package according to claim 10 wherein the sensor component is arranged to receive sensor data during real time while the application package is running.

13. Method to control an ambience with sensor data via metadata, comprising the steps:
- acquiring sensor data during a first playing of a content file;
- creating metadata based on the sensor data;
- associating created metadata with the content file; and further:
- controlling an ambient controller in dependence on the associated metadata during a second playing of the content file.

14. A system for controlling an ambient controller comprising:
- an ambient controller arranged to control an environmental feature controller;
- a processor to control the ambient controller;
- a sensor to acquire sensor data;
- a content player arranged to play a content file, which content file has associated metadata and which metadata comprises data representing sensor data acquired during a previous playing of the content file, and wherein the metadata comprises first metadata and second metadata; and wherein:
- the sensor is arranged to acquire sensor data;
- the processor is arranged to read the first metadata associated with the content file, compare the acquired sensor data with the first metadata, and offer the content file for playback by the content player when the difference between the first metadata and the sensor data is within a first predetermined threshold; and
- the processor is further arranged to control the ambient controller during playback of the offered content file to produce an ambient feature whose range from the second metadata is within a second predetermined threshold.
